# EUROPEAN PATENT APPLICATION

(11) **EP 1 993 287 A1**
(43) Date of publication of application: **19.11.2008**
(21) Application number: 07714491.3
(22) Date of filing: 19.02.2007
(51) Int. Cl.: H04N 7/173, H04N 5/445

(54) **PROGRAM TABLE CREATION DEVICE, TELEVISION BROADCAST RECEPTION DEVICE, AND PROGRAM TABLE CREATION METHOD**

(30) Priority: 28.02.2006 JP 2006051709
(71) Applicant: Panasonic Corporation, Kadoma-shi Osaka 571-8501 (JP)
(72) Inventor: SASAKI, Hirokazu, c/o Matsushita El. Ind. Co., Ltd., IPROC, Chuo-ku, Osaka-shi, Osaka 540-6207 (JP); KATAOKA, Mitsuteru, c/o Matsushita El. Ind. Co., Ltd., IPROC, Chuo-ku, Osaka-shi, Osaka 540-6207 (JP); MORITA, Takuya, c/o Matsushita El. Ind. Co.,Ltd., IPROC, Chuo-ku, Osaka-shi, Osaka 540-6207 (JP)
(74) Representative: Ehlers, Jochen
(86) International application number: PCT/JP2007/052965
(87) International publication number: WO 2007/099803

(57) **Abstract**

A program table generator 100 generates an electronic program table corresponding to multichannel broadcasting in which a plurality of programs are broadcast via one transponder by one broadcaster at the same time. The program table generator 100 includes: an information obtaining part 103 that obtains electronic program information relating to programs to be broadcast; a processing part 104 that determines, based on the electronic program information, whether or not the multichannel broadcasting is carried out, and that, when multichannel broadcasting is carried out, determines the number of non-display programs that are broadcast by the multichannel broadcasting but are not displayed on an electronic program table, and broadcast times of the non-display programs; and a program table generation part 108 that generates an electronic program table such that the number of the non-display programs and the broadcast times of the non-display programs determined by the processing part 104 are suggested.

## Description

### Technical Field

The present invention relates to a television broadcast receiver that is capable of receiving additional information relating to channels and programs that are being broadcast or to be broadcast; to a program table generator used therein; and a program table generation method. The present invention particularly relates to a program table generator and a program table generation method with which the operability on the user's side upon searching for a desired program and obtaining program information can be improved.

### Background Art

Recently, in television broadcasting, not only video information and audio information, but also additional information relating to programs and channels, are transmitted simultaneously in a state of being multiplexed with broadcast signals. As a method for obtaining additional information, other than such a method of obtaining the same from the television broadcast, there also is a method of obtaining the same via the Internet by using a television broadcast receiver that includes the function of connection with the Internet.

Therefore, the television broadcast receivers in recent years have a function of generating a program table, which is called an electronic program table generally, by using such additional information, and displaying the table on a display screen. In this case, a user is allowed actually to select a channel and to plan the program recording by selecting a specific channel or program from the displayed electronic program table.

Generally, in an electronic program table, the programs are displayed by depicting the channels along the horizontal-direction axis and depicting the time along the vertical-direction axis, like the television program schedule in the newspaper. The program table in such a display style is called a two-dimensional program table. Further, based on the two-dimensional program table, when a user requests the display of program information regarding a counterprogram of each channel that is being broadcast, the television broadcast receiver displays the program information of the selected counterprogram. Still further, when a user searches the programs by program genre, keyword, etc., the television broadcast receiver can produce a list of programs based on the search result.

In the two-dimensional program table, from the aspects of visibility and operability, the display range displayed on one screen is set, in many cases, so that the number of channels depicted in the horizontal direction is 3 to 9 channels, and the time depicted in the vertical direction is 3 to 6 hours. Normally, when a user requests the display of the two-dimensional program table, the television broadcast receiver produces a two-dimensional program table based on the present time and the presently selected channel. More specifically, regarding the time, on an initial screen displayed by the television broadcast receiver first, programs for several hours starting from the present time are displayed. Regarding channels, the presently selected channel and several channels in the vicinity of the selected channel are displayed in some cases, while the presently selected channel and several channels having the smaller (or greater) channel numbers than the channel number of the presently selected channel are displayed in other cases.

Still further, in an electronic program table (hereinafter referred to as "an EPG (electronic program guide)" in some cases), all the channels that are received are displayed in some cases, while channels selected according to the initial setting or the user's setting (hereinafter referred to as "favorite channels" in some cases) alone are displayed in other cases.

Incidentally, in digital broadcasting, in some cases an event-sharing broadcasting is carried out, in which one program is broadcast by one broadcaster using a plurality of channels simultaneously. Further, in other cases, multichannel broadcasting is carried out, in which one broadcaster, using a plurality of channels, broadcasts different programs simultaneously on the channels, respectively. Still further, in still other cases, broadcasting is carried out in a state in which event-sharing broadcasting and multichannel broadcasting are performed mixedly.

Therefore, when multichannel broadcasting is performed, if the setting is such that all the channels are displayed in an electronic program table, all the programs broadcast in the respective channels are displayed. In this case, a user is allowed equally to carry out the browsing, the selection, or the recording planning with respect to any broadcast program.

On the other hand, when event-sharing broadcasting is performed, if the setting is such that all the channels are displayed in an electronic program table, one program is displayed for a plurality of channels, which results in lack of browsability. Therefore, the following has been proposed: when event-sharing broadcasting is performed, a plurality of channels that broadcast the same program are integrated into one, which is displayed in the space for one channel in the time frame to be displayed, so that the browsability is improved (see the Patent Document 1).

In the case where event-sharing broadcasting is performed, it is possible to prevent the electronic program table from displaying one program for a plurality of channels, by setting the electronic program table so that the table displays only the favorite channel alone. By so doing, the browsability can be improved. However, if the electronic program table is set so as to display only the favorite channel, this results in programs on channels that are set so as not to be displayed being not displayed when multichannel broadcasting is performed. A user is not allowed to browse programs on channels that are set not to be displayed (such channels are hereinafter referred to as "non-display channels").

Therefore, the following has been proposed: in the case where the setting of the electronic program table is such that only the favorite channel is displayed, a mark indicating that multichannel broadcasting is carried out is displayed when multichannel broadcasting is carried out (the Patent Document 2). FIG. 7 shows a conventional electronic program table. In the example shown in FIG. 7, each cell of a program that is broadcast by multichannel broadcasting and that is displayed on an electronic program table is marked with a mark indicating that there is a program that is not displayed on the table and that is broadcast by multichannel broadcasting. A user is allowed to cause the electronic program table to display the non-display channel by making an appropriate operation by referring to the mark.
Patent Document 1: JP 2004-208187 A
Patent Document 2: JP 2003-309779 A

### Disclosure of Invention

### Problem to be Solved by the Invention

However, even if a mark indicating that multichannel broadcasting is carried out is displayed, the user merely is allowed to know that multichannel broadcasting is carried out and that other programs are broadcast on non-display channels.

Therefore, the user is not allowed to know, for example, what programs are broadcast on non-display channels, or what time the broadcasting of a program broadcast on a non-display channel starts and ends. This is inconvenient to the user.

Further, the user is not allowed to know the magnitude relationship of a channel number of a non-display channel with respect to a channel number of a channel that is set to be displayed, that is, the position relationship of these channels on an electronic program table. This also is inconvenient to the user.

It is an object of the present invention to solve the above-described problems and to provide a program table generator for generating a program table that allows a user to obtain information relating to programs on non-display channels, without changing the setting so that non-display channels are displayed on an electronic program table; a television broadcast receiver in which the program table generator is used; and a program table generation method.

### Means for Solving Problem

In order to solve the above-described conventional programs, a program table generator of the present invention is a program table generator that generates an electronic program table that corresponds to multichannel broadcasting in which a plurality of programs are broadcast by one broadcaster at the same time, and the program table generator includes: an information obtaining part that obtains electronic program information relating to programs to be broadcast; a processing part that determines, based on the electronic program information, whether or not the multichannel broadcasting is carried out, and that, when the multichannel broadcasting is carried out, determines the number of non-display programs and broadcast times of the non-display programs, the non-display programs being programs that are broadcast by the multichannel broadcasting but are not displayed on the electronic program table; and a program table generation part that generates the electronic program table so that the number of the non-display programs and the broadcast times of the non-display programs determined by the processing part are suggested.

In order to solve the above-described conventional problems, a program table generation method of the present invention is a program table generation method for generating an electronic program table that corresponds to multichannel broadcasting in which a plurality of programs are broadcast by one broadcaster at the same time, and the method includes the steps of: (a) obtaining electronic program information relating to programs to be broadcast; (b) determining, based on the electronic program information obtained at the step (a), whether or not the multichannel broadcasting is carried out, and when the multichannel broadcasting is carried out, determining the number of non-display programs and broadcast times of the non-display programs, the non-display programs being programs that are broadcast by the multichannel broadcasting but are not displayed on the electronic program table; and (c) generating the electronic program table so that the number of the non-display programs and the broadcast times of the non-display programs determined by the step (b) are suggested.

Further, in order to solve the above-described conventional programs, a television broadcast receiver of the present invention includes a receiver for receiving broadcast waves of television broadcasting, and a program table generator for generating an electronic program table based on electronic program information relating to programs to be broadcast, wherein the program table generator includes: an information obtaining part that obtains the electronic program information; a processing part that determines, based on the electronic program information, whether or not the multichannel broadcasting in which a plurality of programs are broadcast by one broadcaster at the same time is carried out, and that, when the multichannel broadcasting is carried out, determines the number of non-display programs and broadcast times of the non-display programs, the non-display programs being programs that are broadcast by the multichannel broadcasting but are not displayed on the electronic program table; and a program table generation part that generates the electronic program table so that the number of the non-display programs and the broadcast times of the non-display programs determined by the processing part are suggested.

### Effects of the Invention

With the above-described features, a user can obtain information relating to programs on non-display channels (the number of non-display programs and the broadcast times thereof), without changing the setting so that the non-display channels are displayed on an electronic program table. With the present invention, the user convenience is improved.

### Brief Description of Drawings

[FIG. 1] FIG. 1 is a block diagram illustrating a configuration of a program table generator and a television broadcast receiver according to Embodiment 1 of the present invention.
[FIG. 2] FIG. 2 illustrates a program table that displays all the programs to be broadcast by multichannel broadcasting in Embodiment 1 of the present invention.
[FIG. 3] FIGS. 3A to 3C illustrate electronic program tables according to Embodiment 1 of the present invention; FIGS. 3A, 3B, and 3C show program table examples containing non-display programs when channels 181, 182, and 183 under multichannel broadcasting by a broadcasting station B are displayed, respectively.
[FIG. 4] FIG. 4 is a flowchart that shows a flow of the program table generation method according to Embodiment 1 of the present invention.
[FIG. 5] FIGS. 5A to 5C illustrate electronic program tables according to Embodiment 2 of the present invention; FIGS. 5A, 5B, and 5C show program table examples containing non-display programs when channels 181, 182, and 183 under multichannel broadcasting by a broadcasting station B are displayed, respectively.
[FIG. 6] FIG. 6 shows a flowchart that shows a flow of the program table generation method according to Embodiment 2 of the present invention.
[FIG. 7] FIG. 7 shows a conventional electronic program table.

### Description of the Invention

A program table generator of the present invention is a program table generator that generates an electronic program table that corresponds to multichannel broadcasting in which a plurality of programs are broadcast by one broadcaster at the same time, and the program table generator includes: an information obtaining part that obtains electronic program information relating to programs to be broadcast; a processing part that determines, based on the electronic program information, whether or not the multichannel broadcasting is carried out, and that, when the multichannel broadcasting is carried out, determines the number of non-display programs and broadcast times of the non-display programs, the non-display programs being programs that are broadcast by the multichannel broadcasting but are not displayed on the electronic program table; and a program table generation part that generates the electronic program table so that the number of the non-display programs and the broadcast times of the non-display programs determined by the processing part are suggested.

The program table generator of the present invention preferably is configured so that the program table generation part generates the electronic program table so that one or a plurality of line segments, the number of which is in accordance with the number of the non-display programs, are displayed in a cell for displaying a display program, the display program being a program that is broadcast by the multichannel broadcasting and is displayed on the electronic program table (first aspect). With the first aspect, a user intuitively and quickly can grasp the number of non-display programs.

Further, in the first aspect, preferably, the program table generator generates the electronic program table so that the broadcast time of the non-display program is suggested by a length of the line segment. In this case, a user intuitively and quickly can grasp the broadcast times of the non-display programs as well.

In the first aspect, preferably, the processing part further compares a channel number for the non-display program and a channel number for the display program so as to determine the magnitude relationship of the channel numbers, and the program table generation part generates the electronic program table so that the magnitude relationship of the channel numbers is suggested by display positions of the line segments. In this case, a user can grasp at a glance whether a channel for a non-display program is in a higher order or a lower order with respect to the channel for the display program.

Further, in the above-described case, more specifically, it is preferable that the processing part determines the number of the non-display programs at channel numbers greater than the channel number for the display program, and the number of the non-display programs at channel numbers smaller than the channel number for the display program, based on the magnitude relationship of the channel numbers; and the program table generation part generates the electronic program table so that line segments suggesting the number of the non-display programs at the channel numbers greater than the channel number of the display program, and line segments suggesting the number of the non-display programs at the channel numbers smaller than the channel number of the display program, are displayed at different positions, respectively, in the cell.

Further, the program table generator of the present invention also preferably is configured so that the program table generation part generates the electronic program table so that a cell for displaying the display program that is broadcast by multichannel broadcasting is displayed three-dimensionally, wherein the number of the non-display programs is suggested by a height of the three-dimensionally displayed cell, and the broadcast time of the non-display program is suggested by a length of the three-dimensionally displayed cell in a vertical direction of a display screen (second aspect). With the second aspect also, a user intuitively and quickly can grasp the number of non-display programs and the broadcast times thereof.

In the program table generator of the present invention, preferably, as to at least the non-display program, the processing part further determines a genre of the program, and the program table generation part generates the electronic program table so that the genre of the program determined by the processing part is suggested. In this case, the user convenience is improved further.

A program table generation method of the present invention is a program table generation method for generating an electronic program table that corresponds to multichannel broadcasting in which a plurality of programs are broadcast by one broadcaster at the same time, and the method includes the steps of: (a) obtaining electronic program information relating to programs to be broadcast; (b) determining, based on the electronic program information obtained at the step (a), whether or not the multichannel broadcasting is carried out, and when the multichannel broadcasting is carried out, determining the number of non-display programs and broadcast times of the non-display programs, the non-display programs being programs that are broadcast by the multichannel broadcasting but are not displayed on the electronic program table; and (c) generating the electronic program table so that the number of the non-display programs and the broadcast times of the non-display programs determined by the step (b) are suggested.

The program table generation method of the present invention preferably is configured so that in the step (c), the electronic program table is generated so that one or a plurality of line segments, the number of which is in accordance with the number of the non-display programs, are displayed in a cell for displaying a display program, the display program being a program that is broadcast by the multichannel broadcasting and is displayed on the electronic program table (first aspect). With the first aspect, a user can intuitively and quickly grasp the number of non-display programs.

Further, in the first aspect of the program table generation method of the present invention, preferably, in the step (c), the broadcast time of the non-display program is suggested by a length of the line segment. In this case, a user can intuitively and quickly grasp the broadcast times of non-display programs as well.

In the first aspect of the program table generation method of the present invention, preferably, in the step (b), a channel number for the non-display program and a channel number for the display program are compared so that the magnitude relationship of the channel numbers is determined, and in the step (c), the magnitude relationship of the channel numbers is suggested by display positions of the line segments. In this case, a user can grasp at a glance whether a channel for a non-display program is in a higher order or a lower order with respect to the channel for the display program.

Further, in the above-described case, more specifically, it is preferable that in the step (b), the number of the non-display programs at channel numbers greater than the channel number for the display program, and the number of the non-display programs at channel numbers smaller than the channel number for the display program, are determined further, based on the magnitude relationship of the channel numbers; and in the step (c), the electronic program table is generated so that line segments suggesting the number of the non-display programs at the channel numbers greater than the channel number of the display program, and line segments suggesting the number of the non-display programs at the channel numbers smaller than the channel number of the display program, are displayed at different positions, respectively, in the cell.

Still further, the program table generation method of the present invention also preferably is configured so that in the step (c), the electronic program table is generated so that a cell for displaying the display program that is broadcast by multichannel broadcasting is displayed three-dimensionally, wherein the number of the non-display programs is suggested by a height of the three-dimensionally displayed cell, and the broadcast time of the non-display program is suggested by a length of the three-dimensionally displayed cell in a vertical direction of a display screen (second aspect). With the second aspect of the program table generation method of the present invention as well, a user can intuitively and quickly grasp the number of non-display programs and the broadcast times thereof.

In the program table generation method of the present invention, preferably, in the step (b), as to at least the non-display program, a genre of the program is determined further, and in the step (c), the electronic program table is generated so that the genre of the program determined in the step (b) is suggested. In this case, the user convenience is improved further.

A television broadcast receiver of the present invention is a television broadcast receiver that includes a receiver for receiving broadcast waves of television broadcasting, and a program table generator for generating an electronic program table based on electronic program information relating to programs to be broadcast, wherein the program table generator includes: an information obtaining part that obtains the electronic program information; a processing part that determines, based on the electronic program information, whether or not the multichannel broadcasting in which a plurality of programs are broadcast by one broadcaster at the same time is carried out, and that, when the multichannel broadcasting is carried out, determines the number of non-display programs and broadcast times of the non-display programs, the non-display programs being programs that are broadcast by the multichannel broadcasting but are not displayed on the electronic program table; and a program table generation part that generates the electronic program table so that the number of the non-display programs and the broadcast times of the non-display programs determined by the processing part are suggested.

### Embodiment 1

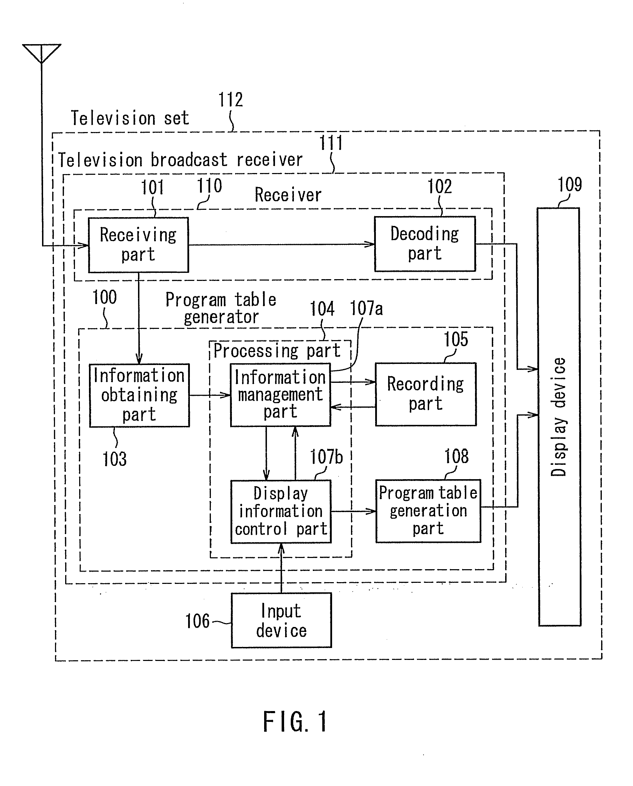

Hereinafter, a program display generator according to Embodiment 1 of the present invention, a television broadcast receiver in which the foregoing program display generator is used, and a program table generation method are described with reference to FIGS. 1 to 4. First, a schematic configuration of the program table generator and a television broadcast receiver according to Embodiment 1 of the present invention is described with reference to FIG. 1. FIG. 1 is a block diagram illustrating a configuration of the program table generator and the television broadcast receiver according to Embodiment 1 of the present invention.

As shown in FIG. 1, a television set 112 includes a television broadcast receiver 111, a display device 109, and an input device 106. The display device 109 is a display device such as, for example, a plasma display device, a liquid crystal display device, or a cathode-ray tube display device. A display screen of the display device 109 displays a program that is received by a receiving part 101 described later and is decoded by a decoding part 102, an electronic program table generated by a program table generation part 108, and the like.

The input device 106 is a remote controller operated by a user (audience), or various types of switches provided on a box of the television set 112. The user is allowed to give an instruction to the television broadcast receiver 111 via the input device 106. For example, via the input device 106, the user changes the channels and the time range displayed on the electronic program table (EPG). Further, via the input device 106, the user changes the display style in the case where multichannel broadcasting is performed. Still further, via the input device 106, the user is allowed to select one of a plurality of cells composing the program table, and changes the cell selected.

Besides, as shown in FIG. 1, the television broadcast receiver 111 according to the present embodiment 1 includes a receiver 110 for receiving broadcast waves of television broadcasting, and a program table generator 100 for generating an EPG based on electronic program information contained in the broadcast waves. The receiver 110 includes a receiving part 101 and a decoding part 102.

The receiving part 101 receives broadcast waves of television broadcasting via an antenna. In the present embodiment 1, the broadcast waves also contain electronic program information relating to programs to be broadcast, in addition to videos and audios of a program. The receiving part 101 outputs only signals relating to the videos and audios of a program to the decoding part 102. On the other hand, the receiving part 101 outputs electronic program information to an information obtaining part 103 described later. The decoding part 102 decodes signals fed from the receiving part 101, which relate to the videos and audios of the program. The decoding part 102 then feeds, to the display device 109, decoded signals of the program that the user has selected so as to be displayed.

The program table generator 100 according to the present embodiment 1 improves the user convenience as compared with the conventional cases, in the case where the EPG is composed of only the channels set by the user preliminarily, for example, by the initial setting, and a program presently displayed is one of the programs broadcast by multichannel broadcasting. It should be noted that multichannel broadcasting refers to broadcasting in which a plurality of programs are broadcast via one transponder by one broadcaster at the same time.

In other words, the program table generator 100 produces an EPG that suggests the number of programs that are broadcast by multichannel broadcasting but are not displayed by the EPG (hereinafter such programs are referred to as "non-display programs") and the broadcast times for these programs. Besides, in the case where the user, by using the input device 106, selects non-display programs that are not selected according to the initial setting, the program table generator 100 produces an EPG that displays the selected programs in the place of the programs displayed according to the initial setting. The following describes the configuration of the program table generator 100 in detail.

As shown in FIG. 1, the program table generator 100 according to the present embodiment 1 includes the information obtaining part 103, a processing part 104, a recording part 105, and a program table generation part 108. The information obtaining part 103 obtains electronic program information fed from the receiving part 101, and feeds the same to the processing part 104. In Embodiment 1, the information obtaining part 103 obtains electronic program information transmitted along with broadcast waves, but the configuration is not limited to this. For example, the information obtaining part 103 may obtain electronic program information from an outside apparatus via a network such as the Internet.

The processing part 104 normally checks the electronic program information against the channels and the like that have been set by the user to be displayed, selects information (display information) necessary for the production of an EPG, and feeds the same to the program table generation part 108. As a result, an EPG is produced, and is displayed by the display device 109. The processing part 104 determines whether or not multichannel broadcasting is performed, in addition to this processing, and when multichannel broadcasting is performed, the processing part 104 determines the number of the non-display programs and the broadcast times of these programs. The processing part 104 outputs the determined number of the determined non-display programs and the broadcast times of the same as display information.

More specifically, the processing part 104 includes the information management part 107a and the display information control part 107b. The information management part 107a obtains the electronic program information outputted by the information obtaining part 103, and causes the recording part 105 to record the obtained electronic program information. The recording part 105 manages the electronic program information, and updates the electronic program information according to the instruction of the information management part 107a so that the electronic program information is in the latest state at all the times.

When requested by the display information control part 107b for output of electronic program information, as described later, the information management part 107a first reads out the electronic program information from the recording part 105. Subsequently, the information management part 107a determines by which broadcasting each program contained in the electronic program information thus read out is broadcast, by event-sharing broadcasting, or by multichannel broadcasting. If it is determined as a result that there is a program broadcast by multichannel broadcasting (hereinafter referred to as "multichannel program"), an attribute indicating that the program is a multichannel program (hereinafter referred to as "multichannel attribute") is added to the electronic program information of the program. Then, the information management part 107a feeds the electronic program information with the multichannel attribute added thereto to the display information control part 107b.

It should be noted that in the case of BS digital broadcasting or digital terrestrial broadcasting, electronic program information generally contains information that determines whether the program is broadcast by event-sharing broadcasting or multichannel broadcasting. Therefore, by analyzing electronic program information, it can be determined regarding each program contained in the electric program information whether the program is broadcast by event-sharing broadcasting or multichannel broadcasting.

Immediately upon the user requesting display of an EPG, that is, a request for display of the EPG is notified by the input device 106, the display information control part 107b requests the information management part 107a to output electronic program information. Then, based on the output electronic program information, the display information control part 107b determines information (EPG display information) such as the channels set to be displayed, the names of the programs to be broadcast on the channels, the time range to be displayed, and the position of the cell for the selected program, and feeds them to the program table generation part 108.

Besides, the display information control part 107b determines, regarding each of the programs displayed as an EPG, whether the program is broadcast by multichannel broadcasting; more specifically, whether a multichannel attribute is added to the electronic program information. When it is determined consequently that multichannel broadcasting is carried out, i.e., that there is a program to which a multichannel attribute is added, the number of non-display programs and the broadcast times are determined.

Further, in the present embodiment 1, the display information control part 107b compares a channel number of a non-display program with a channel number of a program (display program) that is broadcast by multichannel broadcasting and that is displayed by the EPG, and determines the magnitude relationship between the channels numbers. Still further, the display information control part 107b determines, based on the determined magnitude relationship between the channel numbers, whether or not there are non-display programs with greater channel numbers than that of the display program, and whether or not there are non-display programs with smaller channel numbers than that of the display program.

If there are non-display programs with greater channel numbers than that of the display program, the display information control part 107b substitutes a value of the determined number of the non-display programs into a parameter (higher-order counter) that represents the number of the non-display programs. Besides, if there are non-display programs with smaller channel numbers than that of the display program, regarding the number of these non-display programs, the display information control part 107b substitutes a value of the determined number of the non-display programs into a parameter (lower-order counter) that represents the number of the non-display programs. It should be noted that the initial values of the higher-order and lower-order counters are zero. Thereafter, the display information control part 107b also feeds information (multichannel information) that specifies the value of the higher-order counter, the value of the lower-order counter, and the respective broadcast times of the non-display programs to the program table generation part 108.

Further, in the present embodiment 1, the display information control part 107b also determines the genres of the display programs and the non-display programs, based on the electronic program information. Still further, the display information control part 107b feeds the information indicating the determined genre also, as the multichannel information, to the program table generation part 108.

When receiving EPG display information from the processing part 104 (display information control part 107), the program table generation part 108 generates an EPG based on the received EPG display information. In other words, the program table generation part 108 generates data (OSD (On Screen Display) data) necessary for allowing the display device 109 to display the EPG on its display screen, and feeds the same to the display device 109.

However, when multichannel information is transmitted in addition to the EPG display information, in other words, when the values of both of the higher-order counter and the lower-order counter are not zero, the program table generation part 108 generates OSD data that suggest the number of non-display programs and broadcast times thereof. For example, in a cell for displaying a display program to be broadcast by multichannel broadcasting, the program table generation part 108 generates OSD data in which one or a plurality of line segments according to the number of the non-display programs are displayed.

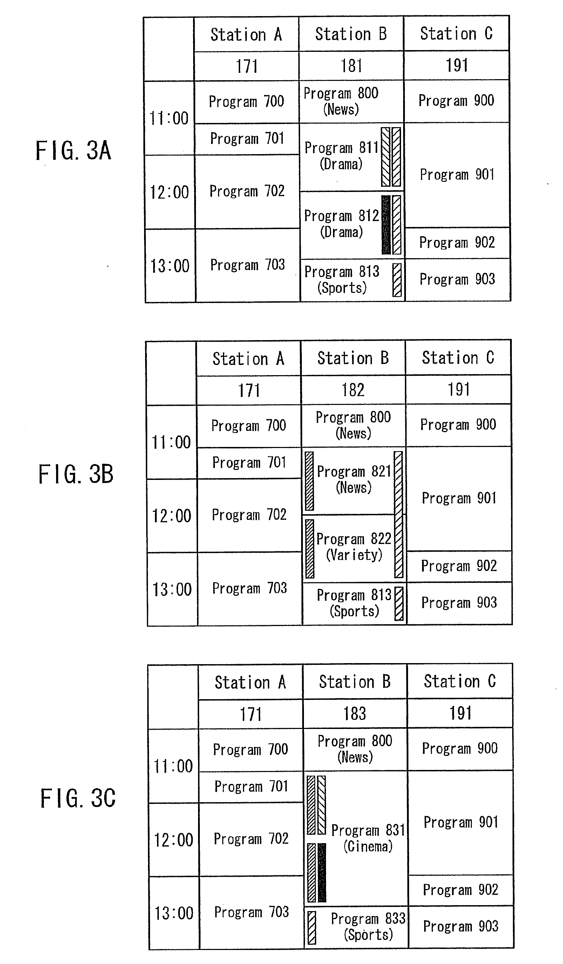

More specifically, in the present embodiment 1, the program table generation part 108 generates OSD data in which in right-side areas of cells for display programs, vertical line segments of the same number as the value of the higher-order counter are displayed, while in left-side areas of the cells, vertical line segments of the same number as the value of the lower-order counter are displayed (see FIGS. 3A to 3C). Further, in the present embodiment 1, the program table generation part 108 generates OSD data also in the manner such that the lengths of the line segments correspond to the lengths of the broadcast times of the non-display programs, respectively.

The program table generation part 108 changes designs of line segments representing display programs according to the genres of the programs determined by the display information control part 107b. Differently designed line segments are registered for genres of the programs, respectively, in the recording part 105 preliminarily. The program table generation part 108 checks the genre of the program specified by the display information control part 107b with the preliminarily registered line segments, and generates OSD data that display a line segment suitable for the determined genre of the program.

When the display device 109 makes display by using such OSD data, a user can grasp, at a glance of an EPG, the magnitude relationship of the channel numbers of display programs and the channel numbers of non-display programs, the number of non-display programs, the broadcast times, and the genres thereof. With the program table generator and the television broadcast receiver according to the present embodiment 1, the user convenience is improved.

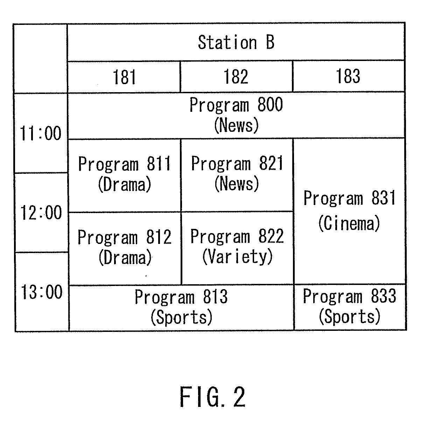

Next, an EPG displayed by the display device 109 when the display information control part 107b determines that multichannel broadcasting is carried out and there are non-display programs is described with reference to FIGS. 2 and 3. FIG. 2 illustrates a program table that displays all the programs to be broadcast by multichannel broadcasting in Embodiment 1 of the present invention. FIGS. 3A to 3C illustrate electronic program tables according to Embodiment 1 of the present invention; FIGS. 3A, 3B, and 3C show program table examples containing non-display programs when channels 181CH, 182CH, and 183CH under multichannel broadcasting by a broadcasting station B are displayed, respectively.

The program table shown in FIG. 2 is a program table displayed by the display device 109 when a user gives an instruction for the display of all the multichannel programs, to the display information control part 107b via the input device 106.

The program table shown in FIG. 2 is displayed by the following procedure. First, in response to an instruction, the display information control part 107b determines whether or not the electronic program information obtained from the information management part 107a has a multichannel attribute. When the result of determination shows that there is a multichannel attribute, information (e.g. program name, broadcast time, genre, etc.) of a program to which a multichannel attribute is attached is extracted, and the information thus extracted is fed to the program table generation part 108. The program table generation part 108 generates OSD data based on the extracted information, and feeds the same to the display device 109.

In the example shown in FIG. 2, the channels 181, 182, and 183 are the channels on which the same broadcaster (broadcasting station B) performs broadcasting. For example, in the time frame from 11:30 to 12:30, different programs are broadcast on the channels 181CH to 183CH, respectively, by the broadcasting station B. In the case where such multichannel broadcasting is carried out, an EPG as shown in any one of FIGS. 3A to 3C is displayed.

As shown in FIGS. 3A to 3C, in an EPG, only cells of one column in the vertical direction are allocated for the display of programs broadcast by one broadcaster. Therefore, in the cells allocated to the display of programs broadcast by the broadcasting station B that carries out multichannel broadcasting, only representative programs among the multichannel programs are displayed. The setting of representative programs (display programs) is made according to the initial setting or an instruction by the user supplied via the input device 106.

Then, as shown in FIGS. 3A to 3B, line segments indicating the presence of multichannel programs that are not displayed (non-display programs) are displayed in cells of representative programs. In the case where a channel number of a non-display program is greater than a channel number of a representative program, a line segment indicating the non-display program is displayed in an area on a greater channel number side in the EPG, that is, a right-side area in the cell for the representative program in FIG. 3 (see FIGS. 3A and 3B). In the case where a channel number of a non-display program is smaller than a channel number of a representative program, a line segment indicating the non-display program is displayed in an area on a smaller channel number side in the EPG, that is, a left-side area in the cell for the representative program in FIG. 3 (see FIGS. 3B and 3C).

Further, each line segment indicating a non-display program has a length determined according to the length of the broadcast time of the non-display program. Still further, the positions of ends of the line segment are set at the start time and the end time of the non-display program along the time axis of the EPG. Therefore, this display allows the user immediately to grasp the broadcast time, the start time and the end time of the non-display program, in addition to the presence of a multichannel program.

In the present embodiment 1, as described above, the designs of the line segments are different, which are set according to the genre of non-display programs, respectively. Therefore, the display of the segments allows the user to grasp the genres of the counterprograms at a glance.

Here, respective examples of FIGS. 3A to 3C are described more specifically. In the example shown in FIG. 3A, regarding the representative program displayed on a cell of the EPG, the display information control part 107b makes a setting such that the program broadcast on the channel 181 is displayed as the representative program. Therefore, the display information control part 107b detects, with respect to a program 811 as the representative program in a time frame of 11:30 to 12:30, that there are non-display programs on two channels having channel numbers greater than the channel number of channel 181, that is, the channels 181 and 182. Then, the display information control part 107b sets the higher-order counter at 2.

Likewise, the display information control part 107b detects, also with respect to a program 812 as the representative program in a time frame of 12:30 to 13:30, that there are non-display programs on the channels 182 and 183, and sets the higher-order counter at 2. Further, with respect to the program 813 as the representative program between 13:30 to 14:00, the display information control part 107b detects that there is a non-display program only on the channel 183, and sets the higher-order counter at 1.

Based on the value of the higher-order counter set by the display information control part 107b, the program table generation part 108 generates OSD data such that two line segments are drawn in each right-side area of the cells for the program 811 and the program 812, and one line segment is drawn in a right-side area of the cell for the program 813. As a result, an EPG shown in FIG. 3A is displayed on the display screen of the display device 109.

In the example shown in FIG. 3B, the display information control part 107b sets the programs broadcast on the channel 182 as the representative programs to be displayed on cells of an EPG. Therefore, the display information control part 107b detects, with respect to each of the programs 821 and 822 as the representative programs, that there are non-display programs on the channel 181 having the channel number smaller than that of the channel 182 and on the cannel 183 having the channel number greater than that of the channel 182. Then, with respect to each of the representative programs, the display information control part 107b sets both the lower-order and higher-order counters at 1. With respect to the program 813 as the representative program, the display information control part 107b sets the higher-order counter at 1, like in the example shown in FIG. 3A. As a result, an EPG shown in FIG. 3B is displayed on the display screen of the display device 109.

In the example shown in FIG. 3C, the display information control part 107b sets the programs broadcast on the channel 183 as representative programs displayed on cells of an EPG. Therefore, the display information control part 107b detects, with respect to a program 831 as the representative program, that there are non-display programs on the channels 181 and 182, which have smaller channel numbers than that of the channel 183. Then, the display information control part 107b sets the lower-order counter at 2. Besides, the display information control part 107b detects, with respect to a program 833, that there is the program 813 on the channels 181 and 182 in the lower order, and sets the lower-order counter at 1. As a result, an EPG shown in FIG. 3C is displayed on the display screen of the display device 109.

The following considers a case where, when the EPG shown in FIG. 3A is displayed on the display device 109, the user makes a channel-up operation to shift the representative channel to a higher-order channel, via the input device 106. In this case, in order to cause an EPG requested by the channel-up operation to be generated, the display information control part 107b changes the values of the higher-order and lower-order counters, and requests the program table generation part 108 to change the representative program, i.e., to generate new OSD data. As a result, the display is switched from the EPG shown in FIG. 3A to the EPG shown in FIG. 3B.

In the case where the user makes a channel-up operation via the input device 106 when the EPG shown in FIG. 3B is displayed by the display device 109, the display information control part 107b also changes the values of the higher-order and lower-order counters. As a result, the display is switched from the EPG shown in FIG. 3B to the EPG shown in FIG. 3C. It should be noted that in the case where the user makes a channel-down operation to shift the representative channel to a lower-order channel via the input device 106, the display information control part 107b also changes the values of the higher-order and lower-order counters. Then, the display is switched from the EPG shown in FIG. 3C to the EPG shown in FIG. 3B, or from the EPG shown in FIG. 3B to the EPG shown in FIG. 3A.

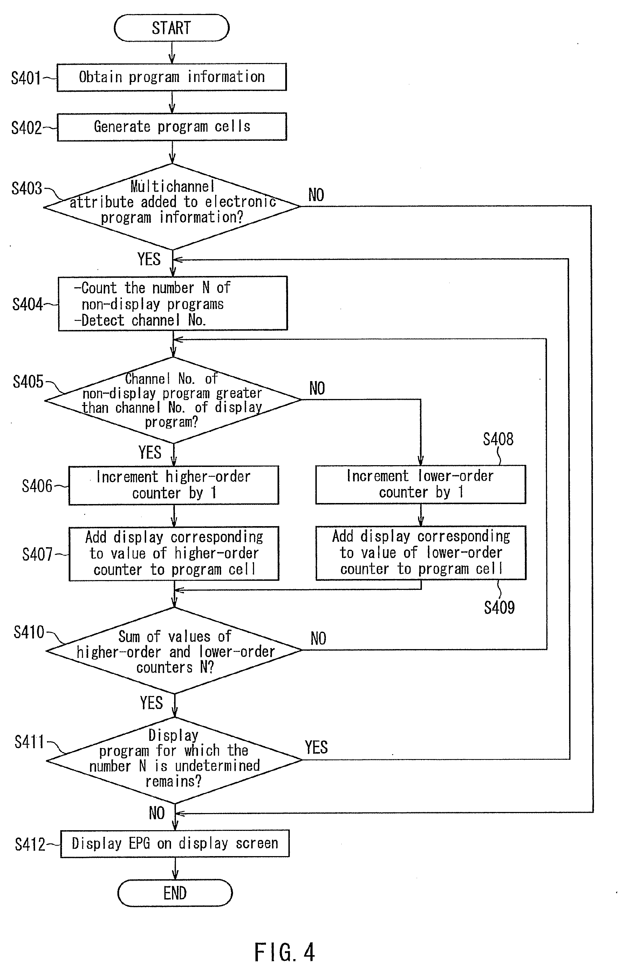

Next, the program table generation method according to Embodiment 1 of the present invention is described with reference to FIG. 4. FIG. 4 is a flowchart that shows a flow of the program table generation method according to Embodiment 1 of the present invention. The program table generation method according to the present embodiment 1 is executed by causing the program table generator 100 according to the present embodiment 1 shown in FIG. 1 to operate. Therefore, the following description of the program table generation method according to the present embodiment 1 is made with reference to FIGS. 1 to 3 appropriately, along with the description of the operation of the program table generator 100 shown in FIG. 1

The processing shown in FIG. 4 indicates an EPG display processing in which the display information control part 107b is requested by the user via the input device 106 to start the display of an EPG, and in response to the request, the display information control part 107b obtains program information from the information management part 107a. Normally, the display information control part 107b specifies the channels and the time frame to be displayed as an EPG, among pieces of the information contained in the program information. In the case where there is a program having a multichannel attribute, the display information control part 107b feeds multichannel information to the program table generation part 108, so as to cause the program table generation part 108 to produce OSD data having suggestion relating to a non-display program. This is described below specifically.

As shown in FIG. 4, first, when a user (audience) enters a request for the display of an electronic program table to the display information control part 107b via the input device 106, the display information control part 107b accesses to the information management part 107a to obtain electronic program information (Step S401). Here, the display information control part 107b obtains program information corresponding to the time at the timing of the display request and the selected channel.

Next, based on the obtained electronic program information, the display information control part 107b specifies the information (EPG display information) such as the channels that are set to be displayed, the names of programs to be broadcast on the channels, the time frame to be displayed, and the positions of cells for the selected programs, and feeds the information to the program table generation part 108. Subsequently, the program table generation part 108 generates program cells composed of cells for a plurality of programs based on the EPG display information fed thereto (Step S402). The program cells form a skeletal outline of an EPG.

Next, the display information control part 107b determines whether or not a multichannel attribute is added to the electronic program information of the programs that composes the program cells at Step S402 (Step S403). When it is determined as a result of Step S403 that there is no multichannel attribute, the processing by the display information control part 107b ends, which is reported to the program table generation part 108. In response to the report, the program table generation part 108 generates OSD data of program cells at Step S402, and feeds the same to the display device 109. Thereafter, Step S412 is performed.

On the other hand, when it is determined as a result of Step S403 that a multichannel attribute is added, the display information control part 107b executes Step S404. At step S404, the display information control part 107b selects one of the display programs to which multichannel attributes are added, respectively, and as to the selected one of such display programs, the display information control part 107b determines the number N of non-display programs. Besides, at Step S404, the display information control part 107 further detects the channel numbers (CH numbers) of the display programs and the non-display programs.

Next, regarding one of the non-display programs counted at Step S404, the display information control part 107b determines whether or not the channel number thereof is greater than the channel number of the display program corresponding to the non-display program (Step S405).

When it is determined as a result of Step S405 that the channel number of the non-display program is greater than that of the display program, the display information control part 107b increments the value of the higher-order counter as one of the pieces of multichannel information (Step S406).

Then, after the execution of Step S406, in order to indicate that there is a non-display program broadcast on the channel with a greater channel number, the display information control part 107b causes the program table generation part 108 to add a display corresponding to the value of the higher-order counter, in the cell of the display program corresponding to the foregoing non-display program (Step S407).

More specifically, the display information control part 107b feeds multichannel information to the program table generation part 108, to cause the program table generation part 108 to generate OSD data such that line segments in the same number as the value of the higher-order counter are displayed in a right-side area of the cell. Further, in the present embodiment 1, the display information control part 107b also outputs, as multichannel information, multichannel information that specifies the broadcast times (including the broadcast start times and the broadcast end times) and the genres of non-display programs. In generating OSD data, the program table generation part 108 causes the broadcast times and the genres to be reflected in the OSD data.

On the other hand, when it is determined as a result of Step S405 that the channel number of the non-display program is not greater, i.e., smaller than the channel number of the display program, the display information control part 107b increments the value of the lower-order counter, which is one of the pieces of multichannel information (Step S408).

Then, after the execution of Step S408, in order to indicate that there is a non-display program broadcast on a channel with a smaller channel number, the display information control part 107b causes the program table generation part 108 to add a display corresponding to the value of the lower-order counter, in the cell of the display program corresponding to the foregoing non-display program (step S409).

More specifically, the display information control part 107b feeds multichannel information to the program table generation part 108, to cause the program table generation part 108 to generate OSD data such that line segments in the same number as the value of the lower-order counter are displayed in a left-side area of the cell. Further, in the same manner as that for Step S407, the display information control part 107b outputs, as multichannel information, multichannel information that specifies the broadcast times (including the broadcast start times and the broadcast end times) and the genres of non-display programs. In generating OSD data at Step S409 also, the program table generation part 108 causes the broadcast times and the genres to be reflected in the OSD data.

Next, when Step S407 or S409 ends, the display information control part 107b determines whether or not the sum of the value of the higher-order counter and the value of the lower-order counter is equal to the number N determined at Step S404 (Step S410).

When it is determined as a result of Step S410 that the sum of the value of the higher-order counter and the value of the lower-order counter is not equal to the number N, the display information control part 107b executes the steps from S405 to S410 repeatedly until the sum becomes equal to N at Step S410.

On the other hand, when it is determined as a result of Step S410 that the sum of the value of the higher-order counter and the value of the lower-order counter is equal to N, Step S411 is executed. At Step S411, the display information control part 107b determines whether or not there is a display program to which a multichannel attribute is added and for which the number N of non-display programs has not yet been determined.

When it is determined as a result of Step S411 that there is a display program for which the number N of non-display programs has not been determined, the steps from S404 to S411 are executed repeatedly until there is no more display program for which the number N of non-display programs is not determined.

On the other hand, when it is determined as a result of Step S411 that there is no display program for which the number N of non-display programs has not been determined, the processing by the display information control part 107b ends, and this is reported to the program table generation part 108. In response to this report, the program table generation part 108 generates final OSD data, and feeds the same to the display device 109. Thereafter, Step S412 is executed. At Step S412, the display device 109 displays an EPG based on the OSD data, and then the processing by the program table generator ends.

As described above, the program table generation method according to the present embodiment 1 allows the user to grasp, at a glance of an EPG, the magnitude relationship between the channel numbers of display programs and the channel numbers of non-display programs, the number of non-display programs, the broadcast times, and the genres. Thus, the user convenience is improved.

It should be noted that in the present embodiment 1, the genres of the non-display programs are specified by designs of line segments, but the configuration is not limited to this. For example, the configuration may be modified so that the genres of the non-display programs are specified by colors of line segments. Further, the present embodiment 1 may be modified so that in order for the line segments to attract the user's attention more, for example, the line segments indicating the presence of non-display programs flash on and off. Still further, the presence of non-display programs may be suggested by icons such as characters or figures other than line segments.

### Embodiment 2

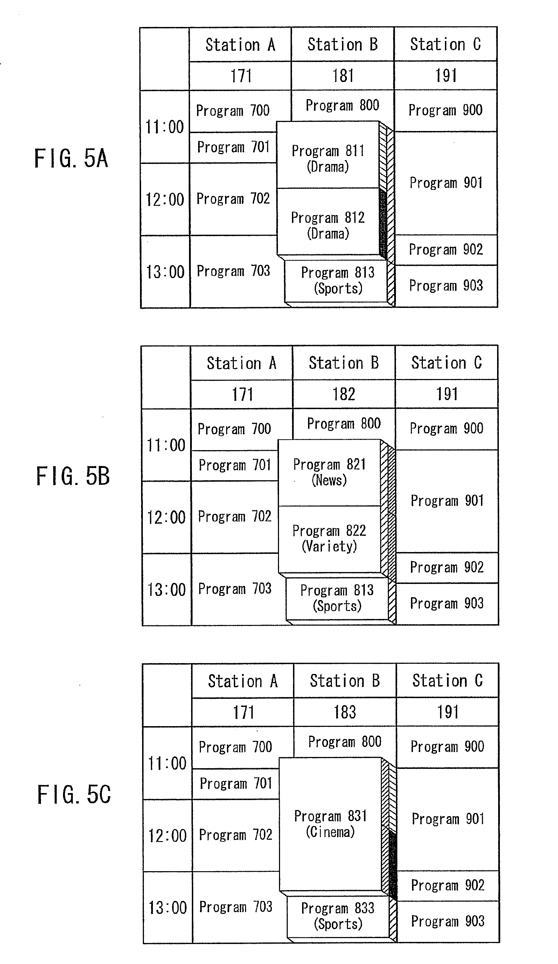

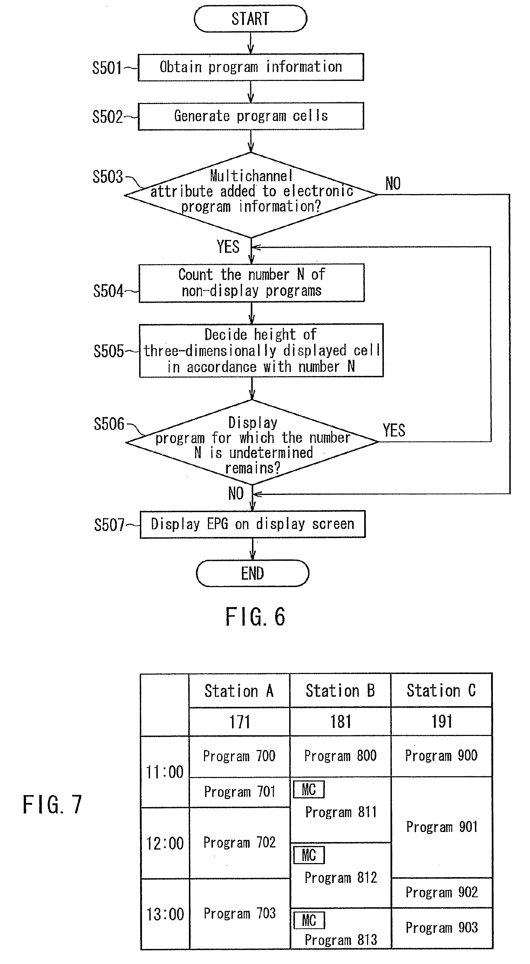

Next, a program table generator according to Embodiment 2 of the present invention, a television broadcast receiver in which the program table generator is used, and a program table generation method are described with reference to FIGS. 5A to 5C and 6. FIGS. 5A to 5C illustrate electronic program tables according to Embodiment 2 of the present invention; FIGS. 5A, 5B, and 5C show program table examples containing non-display programs when channels 181, 182, and 183 under multichannel broadcasting by a broadcasting station B are displayed, respectively. FIG. 6 shows a flowchart that shows a flow of the program table generation method according to Embodiment 2 of the present invention.

The program table generator and the television broadcast receiver according to the present embodiment 2 have configurations identical to those according to Embodiment 1 shown in FIG. 1. The following description is made in view of FIG. 1, with respective parts being denoted with the reference numerals shown in FIG. 1. However, the program table generator in the present embodiment 2 is different from that in Embodiment 1 only in the processing by the program table generation part 108. Because of this difference in the processing, an EPG displayed by the display device is in a form different from that of Embodiment 1 (see FIGS. 5A to 5C). The following describes the difference from Embodiment 1.

In the present embodiment 2, when receiving EPG display information and multichannel information from the display information control part 107b, the program table generation part 108 generates an EPG in which each cell displaying multichannel programs is displayed three-dimensionally. The program table generation part 108 here suggests the number of non-display programs with the heights of the three-dimensionally displayed cells, and suggests the broadcast times of the non-display programs with the lengths, in the vertical direction of the screen, of the three-dimensionally displayed cells. Further, the program table generation part 108 suggests the genres of the non-display programs with the designs or colors of the side faces of the three-dimensionally displayed cells.

For example, assuming that a program table as shown in FIG. 2 according to Embodiment 1 is obtained, an EPG according to the present embodiment 2 is as shown in FIGS. 5A to 5C. As shown in FIGS. 5A to 5C, the cells for display programs are displayed three-dimensionally, in rectangular parallelepiped forms. The rectangular parallelepipeds depicting the cells have heights according to the numbers of non-display programs, respectively.

More specifically, in FIG. 5A, for each of programs 811 and 812, there are two non-display programs. Each of the cells for the programs 811 and 812 is composed of two rectangular parallelepipeds stacked one on the other, each of which has a height H, and hence, the cell has a height of 2 H. On the other hand, there is only one non-display program for the program 813, and the cell for the program 813 is composed of a single rectangular parallelepiped having a height of H, and hence, the cell has a height of 1 H. In other words, each of the cells for the programs 811 and 812 has a height twice the height of the cell for the program 813.

Besides, in the present embodiment 2, side faces of the respective rectangular parallelepipeds are designed differently according to the genres of the non-display programs. In the examples shown in FIGS. 5A to 5C, hatchings for the side faces of the rectangular parallelepipeds are different. It should be noted that the side faces may have different colors, instead of different designs, according to the genres.

In the case where a display program is not broadcast by multichannel broadcasting and there is no non-display program, a rectangular parallelepiped has a height of zero, and the cell is planar. In the case where a program is cancelled, the program table may be displayed as a three-dimensional image with the portion corresponding to the program being recessed by a depth of H.

Further, as shown in FIGS. 5A to 5C, the broadcast times of the non-display programs are indicated by the lengths of the rectangular parallelepipeds in the vertical direction of the screen, respectively. Still further, the broadcast start times and the broadcast end times are indicated by the positions of the rectangular parallelepipeds, respectively.

Thus, in the case where any one of EPGs as shown in FIGS. 5A to 5C is displayed as well, the user can grasp the number, the broadcast times, and the genres of non-display programs, at a glance of the EPG. The user convenience is improved also in the case where the program table generator and the television broadcast receiver according to the present embodiment 2 are used.

Next, the program table generation method according to Embodiment 2 of the present invention is described with reference to FIG. 6. FIG. 6 is a flowchart that shows a flow of the program table generation method according to Embodiment 2 of the present invention. The program table generation method according to the present embodiment 2 also is executed by causing the program table generator 100 according to Embodiment 2 to operate.

Like the processing shown in FIG. 4, the processing shown in FIG. 6 also indicates an EPG display processing in which the display information control part 107b is requested by the user via the input device 106 to start the display of an EPG, and in response to the request, the display information control part 107b obtains program information from the information management part 107a. In the present embodiment 2 also, the display information control part 107b specifies the channels, programs, and broadcast times to be displayed as an EPG, among pieces of the information contained in the program information. In the case where there is a program having a multichannel attribute, the display information control part 107b feeds multichannel information to the program table generation part 108, so as to cause the program table generation part 108 to produce OSD data having suggestion relating to a non-display program. This is described below specifically.

As shown in FIG. 6, first, when a user (audience) enters a request for the display of an electronic program table to the display information control part 107b via the input device, the display information control part 107b accesses to the information management part 107a, to obtain electronic program information (Step S501).

Next, based on the obtained electronic program information, the display information control part 107b specifies the EPG display information, and feeds the same to the program table generation part. Subsequently, the program table generation part 108 generates program cells composed of cells for a plurality of programs based on the EPG display information fed thereto (Step S502).

Next, the display information control part 107b determines whether or not a multichannel attribute is added to the electronic program information of the programs that composes the program cells at Step S502 (Step S503). When it is determined as a result of Step S503 that there is no multichannel attribute, the processing by the display information control part 107b ends, which is reported to the program table generation part 108. In response to the report, the program table generation part 108 generates OSD data of program cells at Step S502, and feeds the same to the display device 109. Thereafter, Step S507 is executed.

On the other hand, when it is determined as a result of Step S503 that a multichannel attribute is added, the display information control part 107b executes Step S504. In Step S504, the display information control part 107b selects one of display programs to which multichannel attributes are added, respectively, and as to the selected one of the display programs, the display information control part 107b determines the number N of non-display programs. It should be noted that Steps S501 to S504 are identical to Steps S401 to S404 of Embodiment 1 shown in FIG. 4, respectively.

Next, the display information control part 107b feeds the number N of non-display programs determined at Step S504 as multichannel information to the program table generation part 108. In the present embodiment 2, the genres of the non-display programs also are fed as multichannel information. Based on the value of the number N of non-display programs, the program table generation part 108 determines the height of cell with which the display program selected at Step S504 is displayed three-dimensionally (Step S505). Besides, as described later, the program table generation part 108 generates OSD data so that the cells are displayed three-dimensionally with the determined heights, respectively.

Next, the display information control part 107b determines whether or not there is a display program to which a multichannel attribute is added and for which the number N of non-display programs has not yet been determined (Step S506). When it is determined as a result of Step S506 that there is a display program for which the number N of non-display programs has not been determined, the steps from S504 to S506 are executed repeatedly until there is no more display program for which the number N of non-display programs is not determined.

On the other hand, when it is determined as a result of Step S506 that there is no display program for which the number N of non-display programs has not been determined, the processing by the display information control part 107b ends, and this is reported to the program table generation part 108. In response to this report, the program table generation part 108 generates OSD data in which the heights of all the cells to be displayed three-dimensionally are determined, and feeds the same to the display device 109. Thereafter, Step S507 is executed. At Step S507, the display device 109 displays an EPG based on the OSD data, and then, the processing by the program table generator 100 ends.

As described above, in the case where the program table generation method according to the present embodiment 2 is used, the user is allowed to grasp, at a glance of an EPG, the number of non-display programs, the broadcast times, and the genres. Thus, in the present embodiment 2 also, the user convenience is improved.

Embodiments 1 and 2 may be modified so that the television broadcast receiver 111 determines whether or not each program to be broadcast is the user's favorite, based on keywords registered by the user or the user's past viewing history. In such a modification, it is preferable that when there is a non-display program that seems to be the user's favorite, the presence of the user's favorite non-display program is indicated in a cell for a display program in the EPG.

### Industrial Applicability

With the program table generator, the television broadcast receiver, and the program table generation method according to the present invention, a user is allowed to know the number of other programs broadcast on non-display channels when multichannel broadcasting is carried out, the broadcast start times thereof, the broadcast end times thereof, and the position relationship of the programs on an electronic program table, without changing the setting so that the non-display channels are displayed, or without specific key manipulation. The present invention relates to a program table generator and a program table generation method for generating an electronic program, which are used in a broadcast receiver that receives additional information relating to channels and programs that are being broadcast or to be broadcast. Particularly, the present invention is useful as a program table generator and a program table generation method with which the operability upon searching for a desired program or obtaining program information can be improved.

## Claims

1. A program table generator for generating an electronic program table that corresponds to multichannel broadcasting in which a plurality of programs are broadcast by one broadcaster at the same time, the program table generator comprising:
an information obtaining part that obtains electronic program information relating to programs to be broadcast;
a processing part that determines, based on the electronic program information, whether or not the multichannel broadcasting is carried out, and that, when the multichannel broadcasting is carried out, determines the number of non-display programs and broadcast times of the non-display programs, the non-display programs being programs that are broadcast by the multichannel broadcasting but are not displayed on the electronic program table; and
a program table generation part that generates the electronic program table so that the number of the non-display programs and the broadcast times of the non-display programs determined by the processing part are suggested.

2. The program table generator according to claim 1, wherein the program table generation part generates the electronic program table so that one or a plurality of line segments, the number of which is in accordance with the number of the non-display programs, are displayed in a cell for displaying a display program, the display program being a program that is broadcast by the multichannel broadcasting and is displayed on the electronic program table.

3. The program table generator according to claim 2, wherein the program table generator generates the electronic program table so that the broadcast time of the non-display program is suggested by a length of the line segment.

4. The program table generator according to claim 3, wherein
the processing part further compares a channel number for the non-display program and a channel number for the display program so as to determine the magnitude relationship of the channel numbers, and
the program table generation part generates the electronic program table so that the magnitude relationship of the channel numbers is suggested by display positions of the line segments.

5. The program table generator according to claim 4, wherein
the processing part determines the number of the non-display programs at channel numbers greater than the channel number for the display program, and the number of the non-display programs at channel numbers smaller than the channel number for the display program, based on the magnitude relationship of the channel numbers, and
the program table generation part generates the electronic program table so that line segments suggesting the number of the non-display programs at the channel numbers greater than the channel number of the display program, and line segments suggesting the number of the non-display programs at the channel numbers smaller than the channel number of the display program, are displayed at different positions, respectively, in the cell.

6. The program table generator according to claim 1, wherein the program table generation part generates the electronic program table so that a cell for displaying the display program that is broadcast by multichannel broadcasting is displayed three-dimensionally, wherein the number of the non-display programs is suggested by a height of the three-dimensionally displayed cell, and the broadcast time of the non-display program is suggested by a length of the three-dimensionally displayed cell in a vertical direction of a display screen.

7. The program table generator according to claim 3, wherein
as to at least the non-display program, the processing part further determines a genre of the program, and
the program table generation part generates the electronic program table so that the genre of the program determined by the processing part is suggested.

8. A program table generation method for generating an electronic program table that corresponds to multichannel broadcasting in which a plurality of programs are broadcast by one broadcaster at the same time, the method comprising the steps of:
(a) obtaining electronic program information relating to programs to be broadcast;
(b) determining, based on the electronic program information obtained at the step (a), whether or not the multichannel broadcasting is carried out, and when the multichannel broadcasting is carried out, determining the number of non-display programs and broadcast times of the non-display programs, the non-display programs being programs that are broadcast by the multichannel broadcasting but are not displayed on the electronic program table; and
(c) generating the electronic program table so that the number of the non-display programs and the broadcast times of the non-display programs determined by the step (b) are suggested.

9. The program table generation method according to claim 8, wherein in the step (c), the electronic program table is generated so that one or a plurality of line segments, the number of which is in accordance with the number of the non-display programs, are displayed in a cell for displaying a display program, the display program being a program that is broadcast by the multichannel broadcasting and is displayed on the electronic program table.

10. The program table generation method according to claim 9, wherein in the step (c), the broadcast time of the non-display program is suggested by a length of the line segment.

11. The program table generation method according to claim 10, wherein
in the step (b), a channel number for the non-display program and a channel number for the display program are compared so that the magnitude relationship of the channel numbers is determined, and
in the step (c), the magnitude relationship of the channel numbers is suggested by display positions of the line segments.

12. The program table generation method according to claim 11, wherein
in the step (b), the number of the non-display programs at channel numbers greater than the channel number for the display program, and the number of the non-display programs at channel numbers smaller than the channel number for the display program, are determined further, based on the magnitude relationship of the channel numbers, and
in the step (c), the electronic program table is generated so that line segments suggesting the number of the non-display programs at the channel numbers greater than the channel number of the display program, and line segments suggesting the number of the non-display programs at the channel numbers smaller than the channel number of the display program, are displayed at different positions, respectively, in the cell.

13. The program table generation method according to claim 8, wherein
in the step (c), the electronic program table is generated so that a cell for displaying the display program that is broadcast by multichannel broadcasting is displayed three-dimensionally,
wherein the number of the non-display programs is suggested by a height of the three-dimensionally displayed cell, and the broadcast time of the non-display program is suggested by a length of the three-dimensionally displayed cell in a vertical direction of a display screen.

14. The program table generation method according to claim 10, wherein
in the step (b), as to at least the non-display program, a genre of the program is determined further, and
in the step (c), the electronic program table is generated so that the genre of the program determined in the step (b) is suggested.

15. A television broadcast receiver comprising a receiver for receiving broadcast waves of television broadcasting, and a program table generator for generating an electronic program table based on electronic program information relating to programs to be broadcast,
wherein the program table generator includes:
an information obtaining part that obtains the electronic program information;
a processing part that determines, based on the electronic program information, whether or not the multichannel broadcasting in which a plurality of programs are broadcast by one broadcaster at the same time is carried out, and that, when the multichannel broadcasting is carried out, determines the number of non-display programs and broadcast times of the non-display programs, the non-display programs being programs that are broadcast by the multichannel broadcasting but are not displayed on the electronic program table; and
a program table generation part that generates the electronic program table so that the number of the non-display programs and the broadcast times of the non-display programs determined by the processing part are suggested.
